# EUROPÄISCHE PATENTSCHRIFT

(11) **EP 1 839 990 B1**
(45) Veröffentlichungstag und Bekanntmachung des Hinweises auf die Patenterteilung: **05.08.2009**
(21) Anmeldenummer: 07006203.9
(22) Anmeldetag: 27.03.2007
(51) Int. Cl.: B61K 9/12, B61L 23/00, G01M 17/10, G01B 21/20

(54) **Anordnung zur Überprüfung der Laufräder von Schienenfahrzeugen**
Assembly for checking the wheels of rail vehicles
Dispositif pour la vérification des roues d'un véhicule ferroviaire

(30) Priorität: 31.03.2006 DE 202006005190 U
(43) Veröffentlichungstag der Anmeldung: 03.10.2007
(73) Patentinhaber: Neuroth, Bernd, 28760 Tres Cantos Madrid (ES)
(72) Erfinder: Neuroth, Bernd, 28770 Colmenar Viejo Madrid (ES)
(74) Vertreter: Kossobutzki, Walter

(56) Entgegenhaltungen:
- WO-A-00/02757
- WO-A-00/73118
- WO-A-90/12720
- WO-A-20/04058554
- DE-A1- 19 913 127
- DE-A1- 19 925 394
- DE-A1- 19 941 843
- DE-C1- 10 010 019
- GB-A- 1 305 003
- US-A- 2 442 491
- US-A- 4 129 276

## Beschreibung

Die Erfindung bezieht sich auf eine Anordnung zur Überprüfung der Laufräder von Schienenfahrzeugen, insbesondere zur Ermittlung unrunder Laufräder von Eisenbahnfahrzeugen, bestehend aus jeweils einer an beiden Schienen des Schienestranges gebildeten Messstrecke, die mit einem Rechner verbunden und innerhalb der einer Schiene im Bereich zumindest einer Schwelle ein Schwellenreaktionskraftsensor zugeordnet ist. Eine solche Anordnung ist z.B. durch die WO 00/73118 bekannt.

Die Laufräder von Schienenfahrzeugen, insbesondere von Eisenbahnfahrzeugen, unterliegen einer verhältnismäßig hohen Beanspruchung,was mit der Zeit dann zu Verschleißerscheinungen führt. Eine häufig auftretende Verschleißerscheinung sind sogenannte Flachstellen. Dabei handelt es sich um eine Beschädigung, die vielfach auch als Abplattung bezeichnet wird. Solche Flachstellen bzw. Abplattungen führen dazu, dass es bei der sonst äußerst gleichmäßigen Kraftübertragung von dem Laufrad auf die Schiene zu kurzzeitigen, jedoch auffällig starken Krafteinwirkungen kommt. Diese Krafteinwirkungen beeinträchtigen die Rundlaufeigenschaften des Laufrades eines Schienen- bzw. Eisenbahnfahrzeuges, was sich insbesondere bei höheren Geschwindigkeiten bemerkbar macht und auch zu Unfällen führen kann. Jedes Laufrad eines Schienenwagens übt nämlich eine Kraft auf die Schiene aus, die als sogenannte Radaufstandskraft bezeichnet wird. Diese Radaufstandskraft setzt sich bei einem fahrenden Schienenfahrzeug aus einem statischen und einem dynamischen Teil zusammen. Der dynamische Teil der Radaufstandskraft erhöht sich, wenn ein Laufrad des Schienenfahrzeuges unrund ist bzw. eine Flachstelle aufweist.

Um Beschädigungen, insbesondere Flachstellen, an Laufrädern von Schienenfahrzeugen, insbesondere von Eisenbahnfahrzeugen, möglichst rasch feststellen zu können und somit Unfälle zu vermeiden, sind Anordnungen bekannt geworden, die eine zuverlässige und kontinuierliche Überwachung der Laufräder sicherstellen. Bei diesen Anordnungen wird an beiden Schienen eines Schienenstranges eine Messstrecke gebildet. Innerhalb jeder Messstrecke ist jeder Schiene im Bereich zumindest einer Schwelle ein Schwellenreaktionskraftsensor angeordnet, der meistens aus einem Dehnungsmessstreifen besteht. Diese Dehnungsmessstreifen werden seitlich auf den Schienen aufgeklebt. Für einen einwandfreien Klebevorgang ist es erforderlich, dass die Schiene im Klebebereich gereinigt und von jeglicher Oxidation befreit wird. Dies ist zeitaufwendig und teuer. Bei nicht einwandfreier Klebung sind Unterrostungen möglich, die das Messergebnis beeinträchtigen können und die einen hohen Instandhaltungsaufwand erfordern. Das Aufkleben der Dehnungsmessstreifen ist darüber hinaus nur bei trockenem Wetter möglich.

Der Erfindung liegt deshalb die Aufgabe zugrunde, eine Anordnung zur Überprüfung der Laufräder von Schienenfahrzeugen, insbesondere zur Ermittlung unrunder Laufräder von Eisenbahnfahrzeugen, zu schaffen, die in kürzester Zeit montiert werden kann, nicht unbedingt trockenes Wetter erfordert und nach ihrer Montage keine witterungsbedingten Beeinträchtigungen erfährt. Daneben sollen selbstverständlich einwandfreie Messergebnisse erzielt werden.

Zur Lösung dieser Aufgabe wird gemäß der Erfindung bei einer Anordnung der eingangs beschriebenen Gattung vorgeschlagen, dass die Messtrecke mindestens die Länge des Umfanges der größtmöglichen, den Schienenstrang befahrenden Laufräder aufweist, die Schwellenreaktionskraftsensoren als Fiberoptiksensoren ausgebildet sind und innerhalb der Messstrecke jeder Schwelle ein Fiberoptiksensor und jeder Schiene zumindest ein Temperatursensor zugeordnet ist.

Eine solche Anordnung ist bei jedem Wetter montierbar. Die Montagezeit ist gegenüber der Verwendung von Dehnungsmessstreifen erheblich kürzer. Die Gefahr von Unterrostungen ist ausgeschlossen. Darüber hinaus ist eine solche Anordnung preiswert. Mit einer solchen Anordnung können die Radaufstandskräfte, die sich bei einem fahrenden Schienenfahrzeug aus einem statischen und einem dynamischen Teil zusammensetzen, sicher und äußerst genau an mehreren Stellen eines Laufrades gemessen werden, so dass immer das gesamte Laufrad messtechnisch erfasst wird. Darüber hinaus ist es mit dieser Anordnung aber auch möglich, Radlastüberschreitungen und Schiefladungen festzustellen und sogar die Verwiegung von einzelnen Schienenfahrzeugen oder ganzen Zügen vorzunehmen.

Die Erfindung wird nachfolgend anhand eines in einer Zeichnung dargestellten Ausführungsbeispieles näher erläutert.

In dieser Zeichnung ist eine Draufsicht auf einen aus zwei Schienen 1 und 2 und nur sieben Schwellen 3a bis 3g gebildeten Schienenstrang dargestellt, in dessen Bereich eine Messstrecke M ausgebildet ist. Die Länge dieser Messtrecke ist etwa 420 cm und damit etwa gleich oder nur geringfügig größer wie der Umfang der größtmöglichen Laufräder der Schienenfahrzeuge, die diesen Schienenstrang befahren. Innerhalb dieser Messstrecke befinden sich aufgrund des üblichen Abstandes der einzelnen Schwellen 3a bis 3g die bereits erwähnten sieben Schwellen 3a bis 3g. Die Schwellen 3a bis 3g sind in einem an sich bekannten und deshalb nicht gezeichneten Schotterbett verlegt und nehmen vorteilhaft jeweils unterhalb der Schienen 1 und 2 eine bekannte, jedoch ebenfalls nicht dargestellte Auflagerplatte auf, die zusammen mit der jeweiligen Schiene 1 und 2 mittels Schrauben und besonderen Sicherungselementen auf den Schwellen 3a bis 3g befestigt ist.

Im gezeichneten Ausführungsbeispiel befindet sich zwischen jeder Auflagerplatte und der jeweiligen Schiene 1 und 2 - es kann allerdings auch zwischen jeder Auflagerplatte und der jeweiligen Schwelle 3a bis 3g sein - ein plattenartig ausgebildeter Fiberoptiksensor 4, welcher jeweils lose eingelegt ist und zu seiner Befestigung in der gezeichneten Lage keinerlei Klebung oder sonstige, zusätzliche Befestigungsmittel benötigt. Er wird in seiner Lage ausschließlich durch die bereits oben erwähnten Schrauben gehalten. Die Montage der Fiberoptiksensoren 4 kann bei jeder Witterung erfolgen, und besondere Vorarbeiten sind nicht erforderlich. Alle Fiberoptiksensoren 4 sind über entsprechende Kabel an einen an sich bekannten und daher nicht gezeichneten Rechner angeschlossen.

Die Fiberoptiksensoren 4 haben die Aufgabe, die jeweils von einem Laufrad eines Schienenfahrzeuges ausgehende Kraft bzw. das Gewicht zu messen. Durch die Vielzahl der eingesetzten Fiberoptiksensoren 4 wird diese Kraft bzw. das Gewicht nicht nur an einem Punkt des Radumfanges, sondern an mehreren Stellen gemessen, so dass das gesamte Laufrad messtechnisch erfasst wird.

Die eingesetzten Fiberoptiksensoren 4 haben die Eigenschaft, dass eines sich die Messergebnisse bei gleicher Kraft bzw. gleichem Gewicht eines Laufrades in Abhängigkeit der Temperatur bzw. der Umgebungstemperatur der Fiberoptiksensoren 4 verändern, was die Messergebnisse beeinflusst. Um diesen Einfluss ist korrigieren, ist jeder Schiene 1 und 2 zumindest ein Temperatursensor 5 zugeordnet. Im gezeichneten Ausführungsbeispiel sind diese Temperatursensoren 5 vorteilhaft im Bereich jeweils eines Fiberoptiksensors 4 an der Schwelle 3c vorgesehen. Dabei können die Temperatursensoren 5 auch an anderer geeigneter Stelle angebracht sein. Die Messergebnisse der Fiberoptiksensoren 4 und der Temperatursensoren 5 werden an einen Rechner übermittelt.

In dem Rechner sind nun die beispielsweise labormäßig ermittelten Werte gespeichert, um die die Messungen der Fiberoptiksensoren 4 in Abhängigkeit von der vorhandenen Temperatur geändert bzw. korrigiert werden müssen, damit die zutreffenden Werte der Fiberoptiksensoren 4 richtig erhalten und insbesondere davon abweichende Werte richtig erfasst werden.

Beim Befahren eines mit einer solchen Messstrecke M ausgerüsteten Schienenstranges werden die Radaufstandskräfte, die sich aus einem statischen und einem dynamischen Teil zusammensetzen, von den Fiberoptiksensoren 5 gemessen. Der dynamische Teil der Radaufstandskraft erhöht sich, wenn ein Laufrad eines Schienenfahrzeuges unrund ist bzw. eine Flachstelle aufweist. Die gemessenen Werte werden dann dem Rechner zugeführt, der jede Abweichung von einem Sollwert feststellt und unzulässige Abweichungen, die die Zugseite, das betroffene Schienenfahrzeug und die genaue Laufradangabe enthalten, einem Kontrollzentrum übermittelt.

In Abänderung des erläuterten Ausführungsbeispieles ist der Einsatz der Fiberoptiksensoren 5 auch dann möglich, wenn keine Auflagerplatten verwendet werden. Bedarfweise können auch jeder Schwelle 3a bis 3g bzw. jeder zweiten oder dritten Schwelle 3a bis 3g Temperatursensoren 5 zugeordnet sein. Die vorbeschriebene Anordnung kann bedarfsweise auch als dynamische Gleiswaage genutzt werden. Dabei ist es möglich, Radlastüberschreitungen und Schiefladungen festzustellen und sogar die Verwiegung von einzelnen Schienenwagen oder ganzen Zügen vorzunehmen. Bisher benötigte Gleiswaagen sind dann entbehrlich.

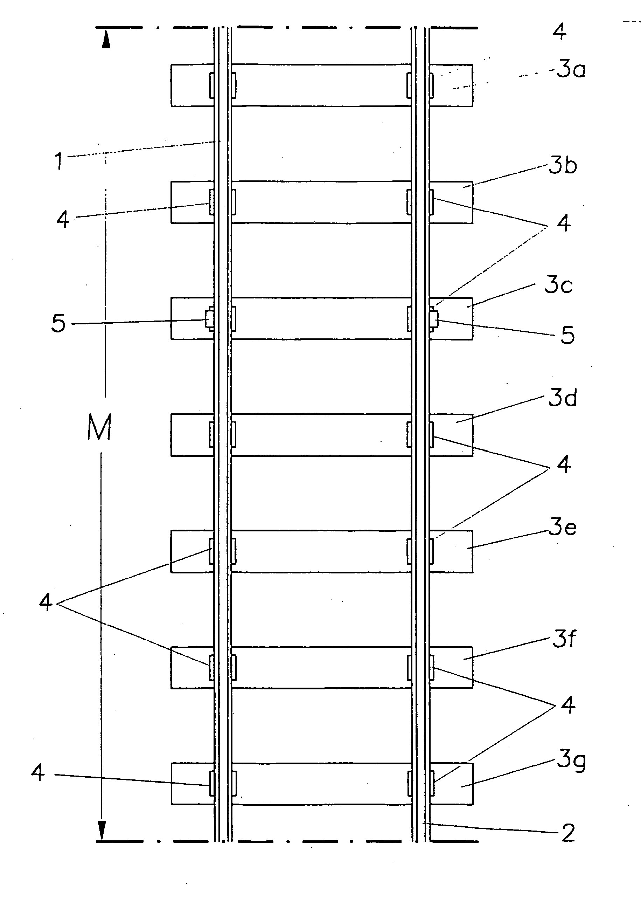

## Patentansprüche

1. Anordnung zur Überprüfung der Laufräder von Schienenfahrzeugen, insbesondere zur Ermittlung unrunder Laufräder von Eisenbahnfahrzeugen, bestehend aus jeweils einer an beiden Schienen des Schienenstranges gebildeten Messstrecke, die mit einem Rechner verbunden und innerhalb der einer Schiene im Bereich zumindest einer Schwelle ein Schwellenreaktionskraftsensor zugeordnet ist,
**dadurch gekennzeichnet,**
**dass** die Messtrecke (M) mindestens die Länge des Umfanges der größtmöglichen, den Schienenstrang befahrenden Laufräder aufweist, die Schwellenreaktionskraftsensoren als Fiberoptiksensoren (4) ausgebildet sind und innerhalb der Messstrecke (M) jeder Schwelle (3a bis 3g) ein Fiberoptiksensor (4) und jeder Schiene (1,2) zumindest ein Temperatursensor (5) zugeordnet ist.

2. Anordnung nach Anspruch 1,
**dadurch gekennzeichnet,**
**dass** die Temperatursensoren (5) im Bereich eines Fiberoptiksensors (4) angeordnet sind.

3. Anordnung nach Anspruch 1 oder 2,
**dadurch gekennzeichnet,**
**dass** innerhalb der Messstrecke (M) jedem Fiberoptiksensor (4) ein Temperatursensor (5) zugeordnet ist.

## Claims

1. An arrangement for checking the running wheels of rail-mounted vehicles, more particularly for determining out-of-round running wheels on railway vehicles, consisting in each case of a measurement section formed on both rails of the rail line, and having a sleeper reaction-force sensor installed within one of the rails, within the area of at least one sleeper, said sensor being connected to a computer,
**characterized in that**
the measurement section (M) has at least the length of the circumference of the largest possible running wheels using the line, the sleeper reaction-force sensors are present as fibre optic sensors (4), and, within the measurement section (M), to each sleeper (3a to 3g) a fibre optic sensor (4) is assigned and to each rail (1, 2) at least one temperature sensor (5) is assigned.

2. An arrangement according to claim 1,
**characterized in that**
the temperature sensors (5) are arranged in the range of a fibre optic sensor (4).

3. A system according to claim 1 or 2,
**characterized in that**
within the measurement section (M), to each fibre optic sensor (4) a temperature sensor (5) is assigned.

## Revendications

1. Dispositif de contrôle des roues de roulement de véhicules sur rails, en particulier pour déterminer des roues de roulement ovalisées de véhicules ferroviaires, constitué respectivement d'une section de mesure formée sur les deux rails de la file de rails, qui est reliée à un ordinateur et au sein de laquelle un capteur de la force de réaction des traverses est affecté à un rail dans la zone d'au moins une traverse,
**caractérisé en ce que**
la section de mesure (M) présente au moins la longueur de la circonférence des roues de roulement les plus grandes possible empruntant la file de rails, les capteurs de la force de réaction des traverses se présentent sous la forme de capteurs en fibre optique (4) et, à l'intérieur de la section de mesure (M), un capteur en fibre optique (4) est affecté à chaque traverse (3a à 3g) et au moins un capteur de température (5) à chaque rail (1, 2).

2. Dispositif selon la revendication 1,
**caractérisé en ce que**
les capteurs de température (5) sont aménagés dans la zone d'un capteur en fibre optique (4).

3. Dispositif selon la revendication 1 ou 2,
**caractérisé en ce que,**
à l'intérieur de la section de mesure (M), un capteur de température (5) est affecté à chaque capteur en fibre optique (4).
